# EUROPEAN PATENT APPLICATION

(11) **EP 1 150 220 A1**
(43) Date of publication of application: **31.10.2001**
(21) Application number: 01420090.1
(22) Date of filing: 11.04.2001
(51) Int. Cl.: G06F 17/30, H04N 1/327, H04N 1/00

(54) **Process for making digital images available to a user on a server**

(30) Priority: 26.04.2000 FR 0005451
(71) Applicant: EASTMAN KODAK COMPANY, Rochester, New York 14650 (US)
(72) Inventor: Vau, Jean-Marie, c/o Kodak Industrie, 71102 Chalon-sur-Saone Cedex (FR)
(74) Representative: Parent, Yves

(57) **Abstract**

A process for making at least one digital image available to a user on a server after processing of the image. In the process, based on a telephone call or a mobile Internet session in which the user sends a code identifying at least one image they desire to have processed, a number is recovered uniquely identifying a terminal by way of which the user sent the code. The code identifying the image is associated with the number identifying the terminal. An address is defined on the server by integrating the number identifying the terminal. Further, at the address, at least one image is stored on the server after processing.

## Description

The present invention relates to a process for making digital images which are saved on a server available to a user.

When a user desires to have his/her photos developed, whether from 24/36 format, APS format, 35mm, or slide cartridges, desires to have a reprint of a photo already on paper, or desires to have an enlargement or any other processing, the user sends the image support to a development laboratory by ordering the processing he/she has chosen. Once the ordered processing has been carried out, the user does not receive his/her orders right away. Further, the time involved in sending a finished job to the retailer where the order was placed needs to be taken into account. Also, if a user cannot get to the retailer, the time to obtain the photos will be even further delayed. However, sometimes the user wishes to have a very rapid idea of the images he/she is to obtain. Also, sometimes the user desires to be able to send the images very rapidly to friends.

Similarly, when the user takes his/her photos with a digital photographic camera, the user sometimes wishes to perform various operations, for example, ordering a print at a chosen retailer, in a kiosk or again sending to various persons one or more of the images on various types of support or in various modified forms.

To solve this problem, French Patent application 0002461 describes a solution that includes making available to the user on a server, their digital or digitized images as soon as the ordered processing has been carried out. This solution implies that the user writes, at the time of ordering the various processing required, for example on the envelop that contains the films to be processed, a message service address to which will be notified the availability of their images on a server. The message service address is, for example, an e-mail address, a fixed telephone number or his/her cellular telephone number. However, the user does not wish necessarily to write their telephone number or e-mail address on an order form. Indeed, everyone who has access to the order can see this number or address and use it. Therefore it is desirable that this information is not accessible from the order form. In addition, the risks of errors in writing or reading the address are quite high. Indeed, the user may write a wrong address or a correct address which is difficult to decipher. The laboratory then has difficulties in reading this address whether the reading is done by a person or by optical character recognition.

It is an object of the present invention to provide a process for making digital images available to a user on a server without their e-mail address being accessible to anyone other than processing laboratory personnel with whom there is no contact.

It is another object of the invention to provide a process for making digital images available to a user on a server by limiting the risk of error in identifying the message service address.

The invention relates to a process for making at least one digital image available to a user on a server wherein:
a) based on a telephone call or a mobile Internet session in which the user sends a code identifying at least one image that they wish to have processed, a number is recovered that uniquely identifies the user's terminal;
b) the code identifying at least one image is linked to the number identifying the terminal;
c) an address is defined on the server by integrating the number identifying the terminal; and
d) on the server at the address defined in c) at least one image is stored after processing.

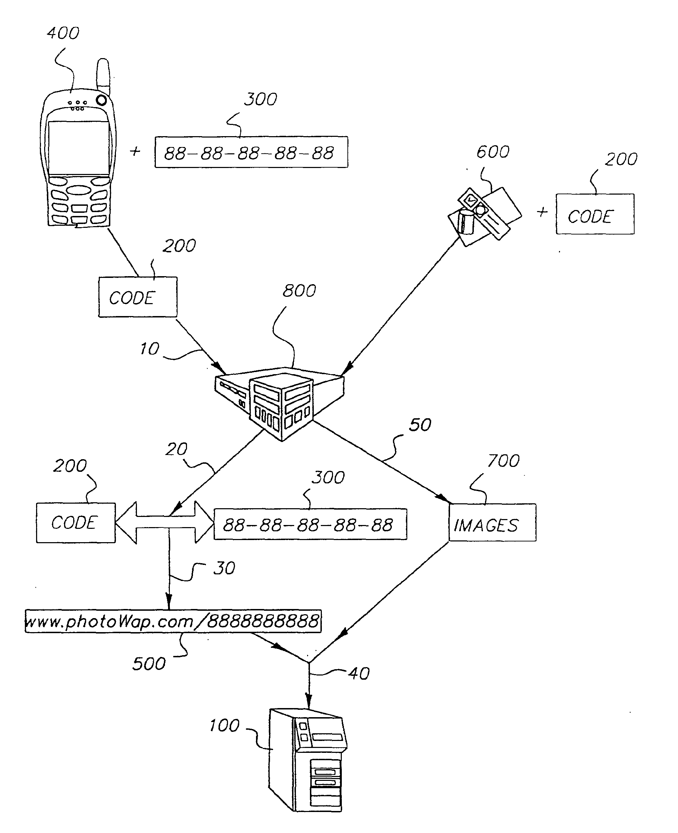

Other characteristics will appear on reading the description that follows, with reference to the drawing wherein:
The single figure represents the process steps according to the invention.
The single figure represents the various process steps of the present invention when one or more images to be processed are silver or photosensitive material type images.

By "silver type images" is meant images that are not in electronic form, that is for example images on a 24/36 format negative, an APS format negative, a slide, etc., or a paper print from one of the previous formats.

When a user wishes to have processed one or more images of this type, that is when they order prints of negatives, reprints or again enlargements, they send a support 600 to be processed at a development laboratory 800, for example. To send the support 600, they have to go to a retailer which acts as an intermediary in this transmission. The laboratory 700 then receives the support 600 on which at least one image to be processed is recorded. After having processed 50 the silver images, the laboratory digitizes the silver images and stores 40 the digitized images 700 on a data server 100. The data server 100 is connected by a high capacity link to a hosting server, enabling the connection to an Internet type network. Preferably, the hosting server is linked by a WAP (Wireless Application Protocol) type gateway intended to provide the communication between the network used for the mobile telephone system, for example GSM, and a cellular telephone.

So that the user can collect his/her images on the server, he/she has to know the address at which the images have been stored on the server. Therefore, the invention proposes that the user, at the moment when they send their support 600 comprising the images to be processed, calls 10 by means of their personal telephone 400 a call center managed by the processing laboratory, or opens a mobile Internet session. By mobile Internet session is meant the connection to a WAP type site where an Internet page is opened enabling data entry.

During this call or session, the user provides a code 200 identifying their images to be processed, especially a code identifying the support 600 on which the images to be processed are found. In the case of APS format films, the user will provide, for example, the number of the APS cartridge. Preferably, additional time data, for example the time and/or date when the user supplied their cartridge for development, can be provided by the user during their call or again be automatically recovered in a mobile Internet session. In the case of 24/36 mm format films, the user will provide for example the number of the envelop into which they inserted their film. Here again, additional time data can be provided by the user during their call or again automatically recovered in a mobile Internet session. On the other hand, it can happen that at least two envelopes are identified with the same number, for example in different countries. To prevent two users from giving the same number identifying their images, advantageously it is arranged that the user also provides an additional number identifying the place where the envelop was handed in, for example a number associated with the retailer. According to an alternative, it can also be arranged for several call centers, each having a different number, to cover a different geographic zone, so that according to the place where the user hands in their envelope containing the film, they phone the call center associated with the retailer where they handed in their envelope. According to another alternative, a unique call center will be used that may be called by telephone numbers that differ according to the place in which the envelop was handed in. According to another preferred alternative, images identified by the same envelop number can be differentiated by, for example, the place where the telephone call is coming from or the mobile Internet session in which the user gave the code identifying the images. Indeed, in a GSM system the terminal which transmitted the call or opened the session can be localized.

This call is, for example, a simple voice call in which the user orally gives the code identifying their images, the message being recorded on an answer machine. The call can also include entering the code identifying the images by means of the keyboard of the terminal used to transmit the call.

According to a particular embodiment of the invention, the user provides their code 200 identifying their images by means of a mobile Internet session, for example a WAP client-server session, instead of making a conventional telephone call. By means of a terminal 400, which can be a mobile telephone or again a PDA (Personal Digital Assistant), the user opens a WAP client-server session in which the online service asks them to enter the code identifying the images and, if necessary, the number associated with the retailer.

The processing laboratory recovers, via the call center, a number 300 uniquely identifying the terminal 400 used by the user to transmit their message or to open their session. The number 300 identifying the terminal 400 is for example the telephone number, especially in the case where the user used a cellular telephone, the MSISDN (Mobile Subscriber Integrated Service Data Network) recoverable in a GSM system.

Thus, for example, the user's telephone number 8888888888 is recovered. This telephone number is associated 20 with the code 200 identifying the images given by the user in their call or in their mobile Internet session. The processing laboratory then defines 30 an address 500 on the server at which it stores 40 the digital images 700. The number 300 identifying the telephone for example is integrated into the address 500 so that it is easy for the user to remember. For example an address like www.PhotoWap.com/888888888 can be used.

According to an alternative, a fixed telephone is provided to be available for the user at a retailer. Preferably this is a telephone dedicated to this call type which is located for example in a kiosk. This telephone can be used by the user in the event that he/she does not have their mobile terminal with them. During their call to the laboratory, they then communicate in addition to the code identifying the images, the number identifying their terminal.

According to a particular embodiment of the invention, the user sends digital images to an image processing laboratory, a retailer or to a telephone service access provider, of Internet type service or to any image related service provider to have their images processed. The user then supplies, for example, a photo CD or DVD type support, or any other support type on which their images are recorded. The user can also, for example, connect their digital camera, via a computer or again via a cellular telephone, to an Internet type network. The user can also upload the camera's card (flash card) on the server of a kiosk or a retailer. Similarly to what has been described for silver images, it can be arranged for the user to phone a call center or open a mobile Internet session to give the code identifying their images.

In order to have access to their images, it is arranged for example that when the user sends the code 200 identifying their images to the call center, they are given the format of the address at which their images will be stored, for example a format of the type www.PhotoWap.com/telephonenumber.

Alternatively, it is arranged, for example, that the laboratory sends to the number 300 identified during the user's call or mobile Internet session identifying the user's images, a telephone message or an SMS (Short Message Service) type message of confirmation in which is given the address at which the images are stored.

In both these cases, when the user uses the terminal identified by the laboratory to access the address at which their images are stored, they are automatically recognized and no additional password is necessary. If the user uses another terminal, a password is preferably required. The laboratory provides for example the password to the user in the SMS message giving them the storage address.

Advantageously, a paper receipt is generated when, for example, the support on which the images are recorded is received by the processing laboratory.

The process of the invention enables a user's images to be made available rapidly to them, in a very confidential way. On the other hand, the risks of errors in the identification of the user's message service are limited. Advantageously the process of the invention enables the images on the server to be made available to the user without additional human intervention by the laboratory.

## Claims

1. A process for making at least one digital image (700) available to a user on a server (100) after processing (50) of the image, a process wherein:
a) based on a telephone call or a mobile Internet session (10) in which the user sends a code (200) identifying said at least one image that they wish to have processed, a number (300) is recovered uniquely identifying a terminal (400) by means of which the user sent the code (200);
b) the code (200) identifying said at least one image is associated (20) with the number (300) identifying the terminal (400);
c) an address (500) is defined (30) on the server (100) by integrating the number (300) identifying the terminal (400);
d) at the address defined in c) said at least one image (700) is stored (40) on the server (100) after processing (50).

2. The process of claim 1 wherein the step a) consists in automatically recovering, during the call or the mobile Internet session (10), the user's telephone number.

3. The process of either of claims 1 or 2 wherein the code (200) identifying said at least one image is a number associated with a support (600) on which said at least one image to be processed is found.

4. The process of claim 3 wherein said at least one image to be processed is a digital image.

5. The process of claim 3 wherein the code (200) identifying said at least one image is number of an APS cartridge on which said at least one image to be processed is found.

6. The process of claim 1 or 2 wherein the code (200) identifying said at least one image is a number of an envelop into which is inserted a film support to be processed on which the said at least one image is found for transmitting to a processing laboratory.

7. The process of claim 6 wherein the code (200) identifying said at least one image further comprises a number identifying a place where the envelop was handed in by the user.

8. The process of claim 6 which further comprises during step a) the step of identifying the place where the telephone call or mobile Internet session is coming from automatically.
